# EUROPÄISCHE PATENTSCHRIFT

(11) **EP 3 807 138 B1**
(45) Veröffentlichungstag und Bekanntmachung des Hinweises auf die Patenterteilung: **25.08.2021**
(21) Anmeldenummer: 20726773.3
(22) Anmeldetag: 15.05.2020
(51) Int. Cl.: B60W 60/00, B60W 30/12, B60W 30/14, G01S 1/00, G01S 3/00, G08G 1/09, G08G 1/16, B60L 53/30, B60W 30/16

(54) **VERFAHREN UND SPURFÜHRSYSTEM ZUM STEUERN EINES AUTONOMEN KRAFTFAHRZEUGS IN EINEM URBANEN GEBIET**
METHOD AND TRACK GUIDANCE SYSTEM FOR CONTROLLING AN AUTONOMOUS MOTOR VEHICLE IN AN URBAN AREA
PROCÉDÉ ET SYSTÈME DE GUIDAGE SUR VOIE POUR COMMANDER UN VÉHICULE À MOTEUR AUTONOME DANS UNE ZONE URBAINE

(30) Priorität: 13.06.2019 DE 102019208647
(43) Veröffentlichungstag der Anmeldung: 21.04.2021
(73) Patentinhaber: Audi AG, 85045 Ingolstadt (DE)
(72) Erfinder: KLEICKMANN, Bodo, 85049 Ingolstadt (DE)
(86) Internationale Anmeldenummer: PCT/EP2020/063566
(87) Internationale Veröffentlichungsnummer: WO 2020/249356

(56) Entgegenhaltungen:
- DE-A1-102010 034 853
- DE-A1-102016 009 461
- US-A1- 2014 018 992
- US-A1- 2014 156 133

## Beschreibung

Die Erfindung betrifft ein Verfahren und ein Spurführsystem zum Steuern eines autonomen Kraftfahrzeugs in einem urbanen Gebiet.

In einem urbanen Gebiet werden an autonom fahrende Kraftfahrzeuge hohe Anforderungen bezüglich einer Interpretation einer Verkehrssituation und einer daraus abgeleiteten Entscheidung gestellt, um eine Verkehrssicherheit zu gewährleisten, da das autonome Kraftfahrzeug in dem städtischen Bereich mit weiteren Verkehrsteilnehmern, zum Beispiel Fußgängern und Radfahrern, interagieren muss.

Eine Verwendung von autonomen Kraftfahrzeugen im urbanen Gebiet hängt insbesondere von rechtlichen Rahmenbedingungen und der gesellschaftlichen Akzeptanz, beispielsweise von einer Verkehrssicherheit, ab. Insbesondere ist für autonome Kraftfahrzeuge eine Schuldfrage bei kritischen Situationen und/oder ein moralisches Handeln in einer solchen Situation nicht geklärt.

Aus der DE 10 2017 202 676 A1 ist eine Anlage zum autonomen Fahren eines Fahrzeugs bekannt. Die Anlage umfasst eine Fahrspur, die baulich durch eine Fahrspurbegrenzung von einer weiteren Fahrspur getrennt ist, wobei sich ein Fahrzeug in einem Anmeldebereich zur Nutzung der Fahrspur anmeldet und in einem Abmeldebereich von der Nutzung der Fahrspur abmeldet.

Nachteilig bei dem Stand der Technik ist es jedoch, dass eine baulich abgetrennte Fahrspur bereitgestellt werden muss, die nur von dem autonomen Kraftfahrzeug genutzt werden kann. Außerhalb dieser Fahrspur, also auf den Straßen des urbanen Gebiets, in dem auch andere Verkehrsteilnehmer unterwegs sind, ist ein Verhalten des autonomen Kraftfahrzeugs nicht geklärt.

US 2014/156133 A1 zeigt ein Verfahren zum Steuern eines Kraftfahrzeugs in einem Verkehrssystem mit für das autonome Fahren vorgesehenen Zonen bzw. Spuren.

Der Erfindung liegt die Aufgabe zugrunde, eine Verkehrssicherheit für die Nutzung eines autonomen Kraftfahrzeugs in einem urbanen Gebiet zu erhöhen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren offenbart.

Die Erfindung basiert auf der Erkenntnis, dass für eine Fahrzeuggeschwindigkeit unterhalb eines vorgegebenen Sicherheitswerts ein autonomes Kraftfahrzeug eine kritische Fahrsituation erkennen kann und beispielsweise ohne Lenkeingriffe und ausschließlich durch Bremsen in einen sicheren Zustand versetzt werden kann, wodurch Unfälle vermieden werden können. Um sich dennoch mit einer höheren Fahrzeuggeschwindigkeit fortbewegen zu können, sind vorgegebene Fahrbahnmarkierungen vorgesehen, auf denen eine Freigabe der Fahrzeuggeschwindigkeit erfolgen kann.

Durch die Erfindung ist ein Verfahren zum Steuern eines autonomen Kraftfahrzeugs in einem urbanen Gebiet bereitgestellt. Das Verfahren umfasst als Schritt a) ein Bestimmen, ob sich das autonome Kraftfahrzeug auf einer vorgegebenen Fahrbahnmarkierung befindet, als Schritt b), falls Schritt a) verneint wird, ein Begrenzen einer Fahrzeuggeschwindigkeit auf einen vorgegebenen Sicherheitswert und als Schritt c), falls Schritt a) bejaht wird, ein Steuern des autonomen Kraftfahrzeugs auf der vorgegebenen Fahrbahnmarkierung, wobei die Fahrzeuggeschwindigkeit auf einen vorgegebenen Geschwindigkeitswert begrenzt wird.

Mit anderen Worten sind in einem urbanen Gebiet, beispielsweise einer Stadt, vorgegebene Fahrbahnmarkierungen vorgesehen, auf denen das autonome Kraftfahrzeug mit einer Fahrzeuggeschwindigkeit bis zu einem vorgegebenen Geschwindigkeitswert fahren kann, wobei der vorgegebene Geschwindigkeitswert sich insbesondere nach einer erlaubten Fahrzeuggeschwindigkeit des urbanen Gebiets richten kann. Beispielsweise kann in einer Stadt die Geschwindigkeit auf 50 km/h begrenzt sein, sodass auf der vorgegebenen Fahrbahnmarkierung das autonome Kraftfahrzeug bis zu 50 km/h fahren kann. Anders formuliert gibt die vorgegebene Fahrbahnmarkierung eine Bewegung des autonomen Kraftfahrzeugs in Fahrzeugquerrichtung vor, während die Bewegung in Längsrichtung entlang der vorgegebenen Fahrbahnmarkierung durch das autonome Kraftfahrzeug, beziehungsweise in Verbindung mit einer Verkehrsinfrastruktur, geplant wird.

Wird jedoch bestimmt, dass sich das autonome Kraftfahrzeug nicht auf der vorgegebenen Fahrbahnmarkierung befindet, wird die Fahrzeuggeschwindigkeit auf einen vorgegebenen Sicherheitswert begrenzt, der insbesondere kleiner als der vorgegebene Geschwindigkeitswert sein kann. Vorzugsweise kann der vorgegebene Sicherheitswert in einem Bereich liegen, in dem eine Notbremsung des Kraftfahrzeugs zu einem sofortigen Fahrzeugstillstand führen kann, das heißt, insbesondere einen Bremsweg von unter einem Meter. Beispielsweise kann der vorgegebene Sicherheitswert in einem Bereich von 5 bis 30 km/h liegen und vorzugsweise in einem Bereich von 12 bis 15 km/h.

Die vorgegebene Fahrbahnmarkierung kann sich vorzugsweise von einem umliegenden Straßenbelag hervorheben, insbesondere durch eine festgelegte Signalfarbe. Die vorgegebene Fahrbahnmarkierung kann jedoch auch durch eine bestehende Verkehrsinfrastruktur, wie beispielsweise Straßenbahnschienen angezeigt sein, über das autonome Kraftfahrzeug fahren kann. Ähnlich wie bei einer Straßenbahnschiene hat auch die vorgegebene Fahrbahnmarkierung die Aufgabe vor autonomen Kraftfahrzeugen zu warnen, das heißt Passanten sind sich bewusst, dass sie einen Bereich betreten, in dem ein autonom fahrendes Kraftfahrzeug zu erwarten ist. Tritt hierbei ein Unfall auf, weil sich beispielsweise ein Verkehrsteilnehmer plötzlich auf die vorgegebene Fahrbahnmarkierung begibt, kann eine Definition der gesetzlichen Schuldfrage erleichtert werden, womit sich die Wahrscheinlichkeit erhöht, dass autonom fahrende Kraftfahrzeuge in einem urbanen Gebiet realisiert werden.

Das Bestimmen, ob sich das autonome Kraftfahrzeug auf der vorgegebenen Fahrbahnmarkierung befindet, kann durch eine Sensoreinrichtung durchgeführt werden, die beispielsweise optische Sensoren, insbesondere eine Kamera oder ein Lidar-Sensor, aufweist und/oder Positionssensoren, die externe Positionierungssignale erhalten, wie beispielsweise GPS oder Referenzsignale einer Infrastruktur des urbanen Gebiets. Vorzugsweise kann auch der vorgegebene Geschwindigkeitswert durch die Sensoreinrichtung detektiert werden. Beispielsweise kann eine Fahrzeugkamera zusätzlich zu der vorgegebenen Fahrbahnmarkierung, die beispielsweise eine durchgezogene Linie in der Mitte der Fahrspur sein kann, auch Verkehrsschilder lesen und somit den zulässigen Geschwindigkeitswert an einer Position bestimmen. Bevorzugt wird bestimmt, dass sich das autonome Kraftfahrzeug auf der vorgegebenen Fahrbahnmarkierung befindet, wenn ein Fahrzeugschwerpunkt oder ein Fahrzeugmittelpunkt innerhalb eines Toleranzbereichs auf der vorgegebenen Fahrbahnmarkierung liegt. Beispielsweise kann im Fall einer durchgezogenen Linie als vorgegebene Fahrbahnmarkierung ein Toleranzbereich ± 30 cm ausgehend von der Fahrzeugmitte festgelegt sein, für den bestimmt wird, dass sich das autonome Kraftfahrzeug auf der vorgegebenen Fahrbahnmarkierung befindet.

Durch die Erfindung ergibt sich der Vorteil, dass eine Fahrzeuggeschwindigkeit des autonomen Kraftfahrzeugs für andere Verkehrsteilnehmer nachvollziehbar ist und ein nachvollziehbares Verhalten des autonomen Kraftfahrzeugs durch die vorgegebene Fahrbahnmarkierung ermöglicht wird. In einem Bereich außerhalb der vorgegebenen Fahrbahnmarkierung, in dem eine Fahrtrichtung und ein Verhalten des autonomen Kraftfahrzeugs von anderen Verkehrsteilnehmern nicht vorhergesagt werden kann, wird die Geschwindigkeit auf den vorgegebenen Sicherheitswerts begrenzt, wodurch die Sicherheit in diesem Bereich durch einen kurzen Bremsweg von beispielsweise unter einem Meter gewährleistet ist. Hierdurch können kritische Verkehrssituationen reduziert werden und eine Verkehrssicherheit kann insgesamt erhöht werden.

Zu der Erfindung gehören auch Ausführungsformen, durch die sich zusätzliche Vorteile ergeben.

Eine Ausführungsform sieht vor, dass das Steuern den Schritt c) ferner ein Ermitteln als Schritt d) umfasst, ob sich ein Objekt innerhalb eines Sicherheitsbereichs vor dem autonomen Kraftfahrzeug befindet, wobei der Sicherheitsbereich entlang der vorgegebenen Fahrbahnmarkierung verläuft und falls Schritt d) bejaht wird, ein Verringern der Fahrzeuggeschwindigkeit an eine Objektgeschwindigkeit, wobei das autonome Kraftfahrzeug während des Verringerns der Fahrzeuggeschwindigkeit auf der vorgegebenen Fahrbahnmarkierung bleibt, falls die Fahrzeuggeschwindigkeit über dem vorgegebenen Sicherheitswert ist.

Mit anderen Worten kann ermittelt werden, ob sich ein Objekt entlang der vorgegebenen Fahrbahnmarkierung innerhalb eines Sicherheitsbereichs befindet, wobei der Sicherheitsbereich beispielsweise eine Breite aufweisen kann, die der Breite des autonomen Kraftfahrzeugs oder der Fahrspur entspricht, und eine Länge entlang der vorgegebenen Fahrbahnmarkierung, die insbesondere an die Fahrzeuggeschwindigkeit angepasst sein kann und die einen Bremsweg bei einer aktuellen Fahrzeuggeschwindigkeit entsprechen kann. Beispielsweise kann eine Länge des Sicherheitsbereichs bei einer Fahrzeuggeschwindigkeit von 50 km/h 25 Meter betragen. Insbesondere ist der Sicherheitsbereich nicht statisch, sondern kann je nach Fahrzeuggeschwindigkeit mit dem autonomen Kraftfahrzeug mitwandern.

Wird in diesem Sicherheitsbereich ein Objekt erkannt, kann sich die Fahrzeuggeschwindigkeit an eine Objektgeschwindigkeit anpassen, ohne dabei die vorgegebene Fahrbahnmarkierung zu verlassen. Beispielsweise kann das Objekt ein vorausfahrendes Fahrzeug sein und das autonome Kraftfahrzeug kann sich an die Geschwindigkeit des vorausfahrenden Fahrzeugs anpassen.

Alternativ oder zusätzlich kann das Objekt auch ein Verkehrsteilnehmer, wie beispielsweise ein Fußgänger sein, der den Sicherheitsbereich vor dem autonomen Kraftfahrzeug betritt. Hierbei kann das Verringern der Fahrzeuggeschwindigkeit an die Objektgeschwindigkeit ein Bremsvorgang bis zu einem Stillstand des autonomen Kraftfahrzeugs sein. Insbesondere kann auch bei einem entgegenkommenden Objekt das autonome Kraftfahrzeug bis zu einem Stillstand abbremsen. Zusätzlich kann bei dem Verringern der Fahrzeuggeschwindigkeit jedoch vorgesehen sein, dass die vorgegebene Fahrbahnmarkierung nicht verlassen wird, solange die Fahrzeuggeschwindigkeit über dem vorgegebenen Sicherheitswert ist. So hat die vorgegebene Fahrbahnmarkierung ähnlich einer Straßenbahnschiene die Aufgabe vor einem autonomen Kraftfahrzeugen zu warnen, das heißt, Passanten sind sich bewusst, dass ein Bereich betreten wird, in dem ein autonomes Kraftfahrzeug zu erwarten ist.

Ist durch ein plötzliches Eintreten eines Objekts, wie zum Beispiel eines anderen Fahrzeugs, in den Sicherheitsbereich eine Kollision nicht vermeidbar, kann, da das autonome Kraftfahrzeug sich weiterhin in einer Querrichtung entlang der vorgegebenen Fahrbahnmarkierung orientieren muss und lediglich in Längsrichtung bremst, ein Zielkonflikt, wie beispielsweise eine Auswahl zwischen zwei Kollisionen, vermieden werden und das Verhalten des autonomen Kraftfahrzeugs ist für weitere Verkehrsteilnehmer stets nachvollziehbar.

Somit ist ein Verhalten des autonomen Kraftfahrzeugs in kritischen Fahrsituationen jederzeit ersichtlich, woraus sich der Vorteil ergibt, dass eine Verkehrssicherheit für andere Verkehrsteilnehmer erhöht werden kann und rechtliche Rahmenbedingungen für eine Nutzung autonomer Kraftfahrzeuge im urbanen Gebiet geschaffen werden können. Des Weiteren können Entscheidungssituationen vermieden werden, da das autonome Kraftfahrzeug nur nach den durch das Verfahren festgelegten Regeln handelt. Eine Entscheidungssituation kann beispielsweise umfassen, ob das autonome Kraftfahrzeug seine Insassen schützt oder andere Verkehrsteilnehmer, oder bei einer unvermeidbaren Kollision eine Auswahl zwischen verschiedenen Kollisionsteilnehmern.

Eine weitere Ausführungsform sieht vor, dass das Steuern in Schritt c) ferner als Schritt e) ein Ermitteln umfasst, ob eine Bewegung des Objekts von einem Beobachtungsbereich in Richtung des Sicherheitsbereichs einer vorgegebenen Bedingung entspricht und falls das bejaht wird, die Fahrzeuggeschwindigkeit verringert wird, wobei das autonome Kraftfahrzeug während des Verringern der Fahrzeuggeschwindigkeit auf der vorgegebenen Fahrbahnmarkierung bleibt.

Mit anderen Worten ist um den Sicherheitsbereich ein Beobachtungsbereich vorgesehen, um zu überprüfen, ob ein Objekt sich in den Sicherheitsbereich bewegt. Beispielsweise kann ein Objekt innerhalb des Beobachtungsbereichs erkannt werden und eine Bewegung des Objekts zeitlich extrapoliert werden, womit ein potentielles Eintreten in den Sicherheitsbereich prädiziert werden kann. Hierfür kann beispielsweise ein Geschwindigkeitsvektor des Objekts in Richtung des Sicherheitsbereichs bestimmt werden und zusammen mit einer Entfernung des Objekts zu dem Sicherheitsbereich kann dann berechnet werden, ob das Objekt in den Sicherheitsbereich eintritt. Ist dies der Fall, kann die vorgegebene Bedingung erfüllt sein und die Fahrzeuggeschwindigkeit kann verringert werden, ohne dass das autonome Kraftfahrzeug von der vorgegebenen Fahrbahnmarkierung abweicht. Somit kann verhindert werden, dass ein Ausweichmanöver andere Verkehrsteilnehmer beeinflussen kann.

Das Objekt kann beispielsweise ein Fahrradfahrer sein, der sich innerhalb des Beobachtungsbereichs befindet und in Richtung des Sicherheitsbereichs fährt. Die vorgegebene Bedingung kann in diesem Beispiel erfüllt sein, falls bestimmt wird, dass sich der Radfahrer bei einer Beibehaltung der Richtung und der Geschwindigkeit in den Sicherheitsbereich vor das autonome Kraftfahrzeug begibt. Daraufhin kann das autonome Kraftfahrzeug die Fahrzeuggeschwindigkeit verringern und so die Fahrzeuggeschwindigkeit beispielsweise bis zu einem Stillstand des Kraftfahrzeugs abbremsen.

Durch diese Ausführungsform ergibt sich der Vorteil, dass eine Verkehrssicherheit dadurch erhöht werden kann, dass auch in den Sicherheitsbereich eintretende Objekte erkannt werden und das autonome Kraftfahrzeug darauf reagieren kann. Zusätzlich kann durch das Verbleiben auf der vorgegebenen Fahrbahnmarkierung eine Beeinflussung anderer Verkehrsteilnehmer, beispielsweise durch ein abruptes Ausweichmanöver, ausgeschlossen werden.

Vorzugsweise ist vorgesehen, dass das Ermitteln, ob sich das Objekt in dem Sicherheitsbereich befindet oder sich in Richtung des Sicherheitsbereichs bewegt, von einem fahrzeuginternen und/oder fahrzeugexternen Sensor durchgeführt wird. Beispielsweise kann ein fahrzeuginterner Sensor eine Kamera oder ein Lidar-Sensor sein, der ein Objekt in dem Sicherheitsbereich detektieren kann. Alternativ oder zusätzlich können entlang der Wegstrecke Sensoren einer Verkehrsinfrastruktur vorgesehen sein, die dem autonomen Kraftfahrzeug im Rahmen einer Fahrzeug-zu-Infrastruktur-Kommunikation Umgebungsinformationen, wie beispielsweise eine Position des Objekts mitteilen können. Hierzu können beispielsweise Daten von Verkehrsüberwachungskameras verwendet werden. Eine weitere Möglichkeit ist eine Fahrzeug-zu-Fahrzeug-Kommunikation, wobei beispielsweise ein vorausfahrendes Kraftfahrzeug nachfolgende Kraftfahrzeuge warnen kann. Hierdurch kann eine Erkennung eines Objekts verbessert werden.

Außerdem kann mittels der fahrzeuginternen und/oder fahrzeugexternen Sensoren eine Redundanz bei der Bestimmung geschaffen werden, ob sich das autonome Kraftfahrzeug auf der vorgegebenen Fahrbahnmarkierung befindet. So kann zusätzlich zu der physischen Markierung der vorgegebenen Fahrbahnmarkierung auf der Straße, welche beispielsweise über den fahrzeuginternen Sensor erkannt werden kann, die vorgegebene Fahrbahnmarkierung auch auf einer Navigationskarte hinterlegt sein, wobei die Navigationskarte entweder im Kraftfahrzeug gespeichert sein kann oder über eine Verbindung zur Verkehrsinfrastruktur zur Verfügung gestellt werden kann, beispielsweise über 5G. Somit ist es beispielsweise möglich, dass das autonome Kraftfahrzeug nur mit Hilfe der fahrzeugexternen Sensoren, die hier als Infrastrukturpunkte beziehungsweise Landmarken dienen, exakt auf der Navigationskarte verortet werden kann. Hierfür kann beispielsweise der fahrzeuginterne Sensor die Infrastrukturpunkte erkennen, indem beispielsweise eine Fahrzeugkamera einen QR-Code auf dem Infrastrukturpunkt erkennt und diesen somit identifiziert. Der genaue Standort des so identifizierten Infrastrukturpunkts kann in der Navigationskarte hinterlegt sein, womit eine exakte Verortung des autonomen Kraftfahrzeugs auf der Navigationskarte möglich ist. Somit kann das autonome Kraftfahrzeug der vorgegebenen Fahrbahnmarkierung auch ohne eine eigene Erkennung folgen.

Ferner kann bei einer erkannten Abweichung zwischen der von dem fahrzeuginternen Sensor erkannten Fahrbahnmarkierung und der in der Navigationskarte hinterlegten Fahrbahnmarkierung eine Sicherheitsreaktion ausgelöst werden, wie beispielsweise das Begrenzen der Fahrzeuggeschwindigkeit auf den vorgegebenen Sicherheitswert. Alternativ kann neben der Fahrspur in der Navigationskarte und auf der Straße auch das Kraftfahrzeug eine eigene Fahrspur planen, die als weitere Redundanz verwendet werden kann.

Folglich kann bei der Erkennung des Umfeldes und anderer Verkehrsteilnehmer durch den fahrzeuginternen und fahrzeugexternen Sensor eine Redundanz geschaffen werden. Außerdem kann dadurch die Möglichkeit eröffnet werden, die Sensorik im Kraftfahrzeug einfacher und kostengünstiger zu gestalten, was sich insbesondere bei einer hohen Verkehrsdichte im urbanen Gebiet auszahlt, da nicht jedes Fahrzeug mit einer teuren Sensorik ausgestattet werden muss, sondern diese auf die Infrastruktur verlagert werden kann und somit allen Fahrzeugen zur Verfügung steht.

Eine weitere Ausführungsform sieht vor, dass das auf der vorgegebenen Fahrbahnmarkierung befindliche autonome Kraftfahrzeug die vorgegebene Fahrbahnmarkierung nur dann verlässt, wenn die Fahrzeuggeschwindigkeit unterhalb des vorgegebenen Sicherheitswertes ist. Mit anderen Worten weicht das autonome Kraftfahrzeug von der vorgegebenen Fahrbahnmarkierung nur ab, wenn die Fahrzeuggeschwindigkeit den vorgegebenen Sicherheitswert unterschreitet. Beispielsweise kann ein Objekt oder ein Hindernis, das auf der vorgegebenen Fahrbahnmarkierung steht, somit umfahren werden. Da sich die Fahrzeuggeschwindigkeit hierzu unterhalb des vorgegebenen Sicherheitswerts befindet, kann das autonome Kraftfahrzeug bei einem unvorhergesehenen Verhalten anderer Verkehrsteilnehmer rechtzeitig reagieren und beispielsweise eine Notbremsung durchführen. Auch ein Verlassen der vorgegebenen Fahrbahnmarkierung, um beispielsweise auf einen Parkplatz zu fahren, kann so durchgeführt werden. Durch diese Ausführungsform ergibt sich der Vorteil, dass eine Verkehrssicherheit erhöht werden kann, falls das autonome Kraftfahrzeug die vorgegebene Fahrbahnmarkierung verlässt. Auch kann so ein Verkehrsfluss aufrecht erhalten werden, wodurch ein Stau vermieden werden kann.

Eine Ausführungsform sieht vor, dass sich die vorgegebene Fahrbahnmarkierung an einem Kreuzungspunkt aufteilt und wobei durch ein optisches Signal an und/oder in der Fahrbahnmarkierung ein Fahrweg des autonomen Kraftfahrzeugs angezeigt wird. Das heißt, dass sich die vorgegebene Fahrbahnmarkierung an einer Kreuzung in verschiedene Richtungen erstrecken kann und beispielsweise das autonome Kraftfahrzeug durch ein optisches Signal, das als Lichtsignal ausgebildet sein kann, anzeigt, in welche Richtung sich das autonome Kraftfahrzeug begibt und/oder ein optisches Signal in der Fahrbahnmarkierung den Fahrweg des autonomen Kraftfahrzeugs anzeigt. Vorzugsweise kann das optische Signal durch ein Lichtband bereitgestellt werden, das eine Wegstrecke des autonomen Kraftfahrzeugs an dem Kreuzungspunkt anzeigt. Der Fahrweg, den das autonome Kraftfahrzeug nimmt, kann beispielsweise über eine Fahrzeug-zu-Infrastruktur-Kommunikation an eine Signalanlage an und/oder in der Fahrbahnmarkierung mitgeteilt werden. Durch diese Ausführungsform ergibt sich der Vorteil, dass ein eindeutiger Bewegungsablauf für das autonome Kraftfahrzeug angezeigt werden kann, wodurch eine Verkehrssicherheit erhöht werden kann.

Eine weitere Ausführungsform sieht vor, dass die vorgegebene Fahrbahnmarkierung durch eine Straßenbahnschiene und/oder eine Markierungsfarbe angezeigt wird. Beispielsweise kann bei der Verwendung einer Straßenbahnschiene gleichzeitig eine Verkehrsinfrastruktur, wie beispielsweise ein Ampelsystem der Straßenbahn, mitgenutzt werden. Beispielsweise kann auch eine Straßenbahn nur entlang der Straßenbahnschienen beschleunigen oder bremsen, wodurch das Verhalten des autonomen Kraftfahrzeugs in ähnlicher Weise für andere Verkehrsteilnehmer bekannt ist. Auch eine spezielle Markierungsfarbe, beispielsweise eine Leuchtfarbe, kann einen Fahrweg des autonomen Kraftfahrzeugs anzeigen. Vorzugsweise kann eine Farbe verwendet werden, die mit fluoreszierenden Farbpartikeln versetzt ist, wodurch eine Fälschung erschwert werden kann. Insbesondere kann eine Fluoreszenz in einem nicht sichtbaren Farbspektrum für die Markierungsfarbe vorgesehen sein, die beispielsweise nur von einer Sensoreinrichtung des autonomen Kraftfahrzeugs erkannt werden kann. Somit kann das autonome Kraftfahrzeug die vorgegebene Fahrbahnmarkierung erkennen und verifizieren.

Eine weitere Ausführungsform sieht vor, dass die vorgegebene Fahrbahnmarkierung ferner durch ein elektromagnetisches Signal angezeigt wird. Das elektromagnetische Signal kann beispielsweise ein Magnetfeld von einem stromdurchflossenen Draht sein, der in der vorgegebenen Fahrbahnmarkierung verlaufen kann. Vorzugsweise kann das autonome Kraftfahrzeug einen Sensor aufweisen, der dieses Magnetfeld detektieren kann, wodurch das autonome Kraftfahrzeug entlang des Drahtes manövriert werden kann. Eine weitere Möglichkeit ist eine Identifikation über ein Radiofrequenzsignal, zum Beispiel RFID, durch den das autonome Kraftfahrzeug die vorgegebene Fahrbahnmarkierung verifizieren kann und beispielsweise den vorgegebenen Geschwindigkeitswert erhalten kann. Besonders bevorzugt können Induktionsspulen in der vorgegebenen Fahrbahnmarkierung vorhanden sein, die über eine entsprechende Induktionsspule im autonomen Kraftfahrzeug zusätzlich zu der Anzeige der Fahrbahn eine Batterie des autonomen Kraftfahrzeugs laden können. Das heißt, dass sich die Induktionsspulen in der Straße unterhalb der vorgegebenen Fahrbahnmarkierung befinden können, so dass das Kraftfahrzeug beim Fahren auf der vorgegebenen Fahrbahnmarkierung kontaktlos geladen werden kann. Vorzugsweise können die Induktionsspulen von den Infrastrukturpunkten (externe Sensoren) beziehungsweise Landmarken, die als Säulen entlang der Straße angeordnet sein können, mit Strom gespeist werden. Auch können die Infrastrukturpunkte (externe Sensoren) entlang der Straße als konventionelle Ladestationen für elektrisch betriebene Kraftfahrzeuge dienen. Insbesondere können somit die externen Sensoren mehrere Funktionen in einer Einrichtung vereinigen, wie beispielweise die Erkennung des Umfeldes, Sende/Empfangspunkte für die Fahrzeug-zu-Infrastruktur Kommunikation (zum Beispiel 5G), Infrastrukturpunkte beziehungsweise Landmarken zur Unterstützung der Lokalisierung des Kraftfahrzeugs und Energieeinspeisepunkte für induktives Laden oder auch konventionelles Laden. Besonders bevorzugt können die Infrastrukturpunkte (externe Sensoren) entlang der Strecke, auf der sich eine vorgegebene Fahrbahnmarkierung befindet, derart angeordnet sein, dass das Kraftfahrzeug immer im Sichtfeld von mindestens einem Infrastrukturpunkt (externen Sensor) ist.

Eine weitere Ausführungsform sieht vor, dass für den vorgegebenen Sicherheitswert eine Geschwindigkeit verwendet wird, insbesondere ein Wert in einem Bereich von 5 km bis 15 km. Sicherheitsbetrachtungen haben ergeben, dass innerhalb dieses Geschwindigkeitsbereichs, insbesondere bei 10 km ± einer Toleranz, beispielsweise von 10 Prozent, ein Erkennen einer kritischen Fahrsituation ohne Lenkeingriffe und ausschließlich durch Bremsen das autonome Kraftfahrzeug in einen sicheren Zustand versetzt werden kann. Somit können Unfälle vermieden werden und eine Verkehrssicherheit kann erhöht werden.

Ein weiterer Aspekt der Erfindung betrifft ein Spurführsystem zum Steuern eines autonomen Kraftfahrzeugs in einem urbanen Gebiet. Das Spurführsystem weist eine Sensoreinrichtung auf, die dazu ausgebildet ist, zu bestimmen, ob sich das autonome Kraftfahrzeug auf einer vorgegebenen Fahrbahnmarkierung befindet. Ferner weist das Spurführsystem eine Steuereinrichtung auf, die dazu ausgebildet ist, eine Fahrzeuggeschwindigkeit auf einen vorgegebenen Sicherheitswert zu begrenzen, falls sich das autonome Kraftfahrzeug nicht auf der vorgegebenen Fahrbahnmarkierung befindet, und das autonome Kraftfahrzeug zu steuern und die Fahrzeuggeschwindigkeit auf einen vorgegebenen Geschwindigkeitswert zu begrenzen, falls sich das autonome Kraftfahrzeug auf der vorgegebenen Fahrbahnmarkierung befindet. Hierbei ergeben sich gleiche Vorteile und Variationsmöglichkeiten wie bei dem Verfahren.

Das autonome Kraftfahrzeug ist bevorzugt als Kraftwagen, insbesondere als Personenkraftwagen oder Lastkraftwagen, oder als Personenbus ausgestaltet.

Zu der Erfindung gehört auch die Steuereinrichtung für das autonome Kraftfahrzeug. Die Steuereinrichtung weist eine Prozessoreinrichtung auf, die dazu eingerichtet ist, eine Ausführungsform des erfindungsgemäßen Verfahrens durchzuführen.

Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsformen des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen Spurführsystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Spurführsystems hier nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Spurführsystems gemäß einer beispielhaften Ausführungsform;
- Fig. 2: eine schematische Darstellung eines Passiervorgangs gemäß einer beispielhaften Ausführungsform des Spurführsystems;
- Fig. 3: eine schematische Darstellung eines Abbiegevorgangs gemäß einer beispielhaften Ausführungsform des Spurführsystems;
- Fig. 4: ein schematisches Verfahrensdiagramm gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

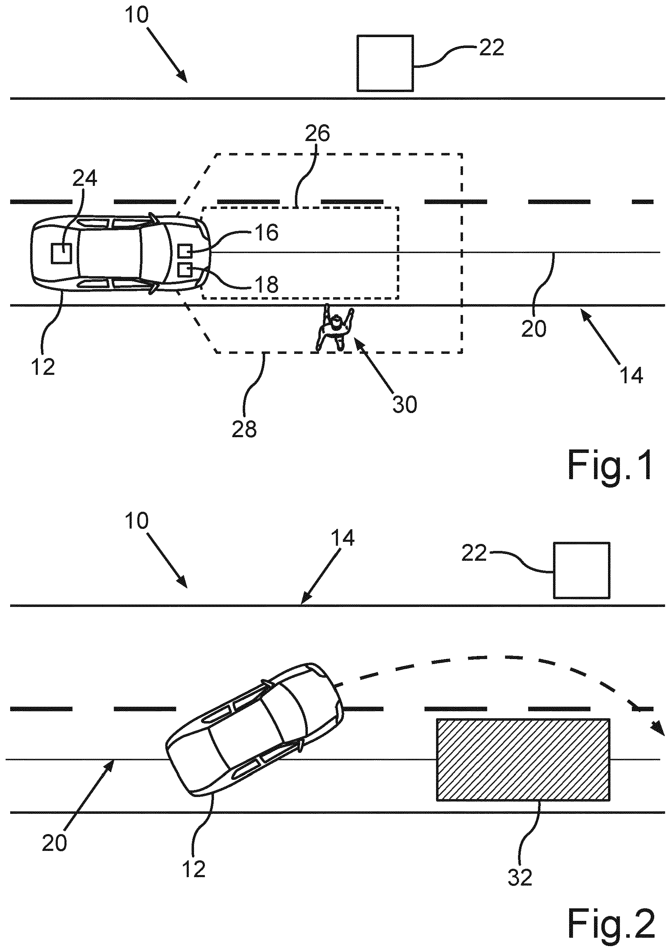

In Fig. 1 ist eine schematische Darstellung eines Spurführsystems 10 zum Steuern eines autonomen Kraftfahrzeugs 12 in einem urbanen Gebiet dargestellt. Das Spursystem 10 kann dazu ausgelegt sein, das autonome Kraftfahrzeug 12 auf einer Straße 14 des urbanen Gebiets zu steuern. Dazu kann das autonome Kraftfahrzeug eine Sensoreinrichtung 16 und eine Steuereinrichtung 18 aufweisen.

Die Sensoreinrichtung 16 kann dazu ausgelegt sein, zu überprüfen, ob sich das autonome Kraftfahrzeug 12 auf einer vorgegebenen Fahrbahnmarkierung 20 befindet. Hierzu kann die Sensoreinrichtung 16 beispielsweise eine oder mehrere Kameras aufweisen, die eine Straßenoberfläche überwachen. Zusätzlich oder alternativ kann die Sensoreinrichtung 16 auch einen fahrzeugexternen Sensor 22 aufweisen, der beispielsweise als eine Verkehrsüberwachungssäule ausgebildet sein kann, und der insbesondere eine Kamera aufweisen kann, um eine Positionierung des autonomen Kraftfahrzeugs 12 zu bestimmen und der Referenzpunkte zur Korrektur einer Positionierung des autonomen Kraftfahrzeugs an das autonome Kraftfahrzeug 12 senden kann. Hierzu kann insbesondere eine Fahrzeug-zu-Infrastruktur-Kommunikation, vorzugsweise mit einer 5G-Technologie, vorgesehen sein.

Die vorgegebene Fahrbahnmarkierung 20 kann sich vorzugsweise optisch von der Straße 14 abheben, insbesondere von anderen Fahrbahnmarkierungen wie der Mittellinie. Beispielsweise kann die vorgegebene Fahrbahnmarkierung 20 in einer Ausführungsform eine Straßenbahnschiene sein, die auf der Straße 14 verläuft. In diesem Ausführungsbeispiel ist die vorgegebene Fahrbahnmarkierung 20 eine durchgezogene Linie in der Mitte einer Fahrbahnseite und weist vorzugsweise eine Markierungsfarbe auf, die die vorgegebene Fahrbahnmarkierung 20 von der Straße 14 abhebt. Insbesondere kann die Markierungsfarbe eine fluoreszierende Farbe sein.

Besonders bevorzugt kann die vorgegebene Fahrbahnmarkierung 20 ein elektromagnetisches Signal ausstrahlen, beispielsweise indem ein stromdurchflossener Draht oder mehrere hintereinander angeordnete Induktionsspulen entlang der vorgegebenen Fahrbahnmarkierung 20 verlaufen. Im Falle der Induktionsspulen besteht neben einer Möglichkeit, eine Position des autonomen Kraftfahrzeugs auf der vorgegebenen Fahrbahnmarkierung 20 durch die Sensoreinrichtung 16 zu bestimmen, indem das elektromagnetische Signal detektiert wird, die Möglichkeit, dass sich eine Induktionsspule in der Straße mit einer Induktionsspule 24 des autonomen Kraftfahrzeugs koppeln kann und somit eine Traktionsbatterie (nicht gezeigt) des autonomen Kraftfahrzeugs während einer Fahrt aufladen kann.

Wird von der Sensoreinrichtung 16 bestimmt, dass sich das autonome Kraftfahrzeug 12 nicht auf der vorgegebenen Fahrbahnmarkierung 20 befindet, begrenzt die Steuereinrichtung 18 eine Fahrzeuggeschwindigkeit auf einen vorgegebenen Sicherheitswert. Der vorgegebene Sicherheitswert kann die Fahrzeuggeschwindigkeit auf einen Wert eingrenzen, bei dem in einer Gefahrensituation das autonome Kraftfahrzeug 12 schnell zum Stillstand gebracht werden kann. Für den vorgegebenen Sicherheitswert wird eine Schrittgeschwindigkeit verwendet, die in einem Bereich von 1 bis 16 km/h liegen kann. Somit kann bei kritischen Fahrsituationen das autonome Kraftfahrzeug 12 ausschließlich durch Bremsen in einen sicheren Zustand versetzt werden, wodurch Unfälle vermieden werden können.

Wird von der Sensoreinrichtung 16 festgestellt, dass sich das autonome Kraftfahrzeug 12 auf der vorgegebenen Fahrbahnmarkierung 20 befindet, kann das autonome Kraftfahrzeug 12 von der Steuereinrichtung 18 auf der vorgegebenen Fahrbahnmarkierung gesteuert werden, das heißt, es kann entlang der vorgegebenen Fahrbahnmarkierung 20 manövriert werden. Hierzu kann die Steuereinrichtung 18 die Fahrzeuggeschwindigkeit auf einem vorgegebenen Geschwindigkeitswert begrenzen, der beispielsweise durch das urbane Gebiet oder die derzeit befahrene Straße 14 festgelegt sein kann und eine zulässige Höchstgeschwindigkeit darstellen kann. Diese zulässige Höchstgeschwindigkeit kann beispielsweise von der Sensoreinrichtung 16 durch Detektieren eines Straßenschilds festgestellt werden oder dem autonomen Kraftfahrzeug 12 von einer externen Quelle, wie beispielsweise dem externen Sensor 22, mitgeteilt werden. Beispielsweise kann der fahrzeugexterne Sensor 22 neben einer Positionsinformation auch Daten an das Kraftfahrzeug senden, insbesondere den vorgegebenen, erlaubten Geschwindigkeitswert.

Somit ist es möglich, dass das autonome Kraftfahrzeug 12 auf der vorgegebenen Fahrbahnmarkierung 20 mit einer maximal zulässigen Geschwindigkeit fahren kann, da andere Verkehrsteilnehmer einen Weg des autonomen Kraftfahrzeugs vorhersagen können, ähnlich wie den Weg einer Straßenbahn auf Straßenbahnschienen. Somit ist das Verhalten des autonomen Kraftfahrzeugs für weitere Verkehrsteilnehmer stets nachvollziehbar.

Zur weiteren Erhöhung der Verkehrssicherheit kann während der Fahrt vor dem autonomen Kraftfahrzeug 12 ein Sicherheitsbereich 26 vorgesehen sein, der beispielsweise eine Straßenseite vor dem autonomen Kraftfahrzeug 12 abdeckt und dynamisch an die Geschwindigkeit des autonomen Kraftfahrzeugs 12 angepasst werden kann. Wird von der Sensoreinrichtung 16 des autonomen Kraftfahrzeugs oder von dem fahrzeugexternen Sensor 22 ermittelt, dass sich ein Objekt, wie beispielsweise ein anderes Fahrzeug, innerhalb des Sicherheitsbereichs vor dem autonomen Kraftfahrzeug befindet, kann die Steuereinrichtung 18 die Fahrzeuggeschwindigkeit an eine Objektgeschwindigkeit, beispielsweise an eine Geschwindigkeit des vorausfahrenden Fahrzeugs anpassen, indem es insbesondere bei einem langsam fahrenden Fahrzeug die Geschwindigkeit verringert.

Zusätzlich zu dem Sicherheitsbereich 26 kann ein Beobachtungsbereich 28 vorgesehen sein, der den Sicherheitsbereich 26 erweitert. In dem Beobachtungsbereich 28 können Objekte, wie beispielsweise ein Fußgänger 30, daraufhin überwacht werden, ob sich diese in den Sicherheitsbereich 26 bewegen. Hierbei kann beispielsweise eine Geschwindigkeit des Fußgängers 30 in Richtung des Sicherheitsbereichs 26 festgestellt werden, indem eine zeitlich veränderliche Position des Fußgängers extrapoliert wird. Wird festgestellt, dass diese Geschwindigkeit und Position des Fußgängers einer vorgegebenen Bedingung entspricht, kann die Steuereinrichtung 18 das autonome Kraftfahrzeug 12 dazu veranlassen, die Fahrzeuggeschwindigkeit zu verringern und im Falle eines plötzlichen Eintretens des Fußgängers in den Sicherheitsbereich 26 eine Notbremsung veranlassen.

Die vorgegebene Bedingung kann beispielsweise dann eintreten, wenn der Fußgänger 30 eine vorgegebene Geschwindigkeit in Richtung des Sicherheitsbereichs 26 übersteigt. Insbesondere kann jedoch vorgesehen sein, dass bei der Verringerung der Fahrzeuggeschwindigkeit das autonome Kraftfahrzeug 12 auf der vorgegebenen Fahrbahnmarkierung 20 bleibt. Das bedeutet, dass selbst bei einer Notbremsung kein Ausweichmanöver durchgeführt werden soll, wodurch andere Verkehrsteilnehmer gefährdet werden könnten. Somit ist das Verhalten des autonomen Kraftfahrzeugs auf der vorgegebenen Fahrbahnmarkierung 20 für jeden Verkehrsteilnehmer vorhersagbar, durch die Schaffung der für andere Verkehrsteilnehmer nachvollziehbaren und sichtbaren Fahrbahnmarkierung. Somit können auch die Rahmenbedingungen zur Schaffung gesetzlicher Vorgaben im Falle von Unfällen autonomer Kraftfahrzeuge geschaffen werden.

In Fig. 2 ist eine schematische Darstellung eines Passiervorgangs des autonomen Kraftfahrzeugs gemäß einer beispielhaften Ausführungsform dargestellt. In dieser Ausführungsform kann ein Objekt 32, das beispielsweise ein parkendes Fahrzeug sein kann, die vorgegebene Fahrbahnmarkierung 20 auf der Straße 14 blockieren. Das autonome Kraftfahrzeug 12 kann sich diesem Objekt 32 nähern und bei Eintreten des Objekts 32 in den Sicherheitsbereich des autonomen Kraftfahrzeugs kann das autonome Kraftfahrzeug 12 seine Geschwindigkeit verringern und beispielsweise hinter dem Objekt 32 zum Stillstand kommen. Damit das autonome Kraftfahrzeug 12 dennoch die Fahrt fortsetzen kann, kann vorgesehen sein, dass das autonome Kraftfahrzeug 12 die vorgegebene Fahrbahnmarkierung 20 zum Passieren des Objekts 32 verlässt. Hierfür kann vorzugsweise überprüft werden, ob eine Geschwindigkeit des autonomen Kraftfahrzeugs unterhalb des vorgegebenen Sicherheitswerts, also der Schrittgeschwindigkeit, ist.

Ist dies der Fall, kann das autonome Kraftfahrzeug 12 die vorgegebene Fahrbahnmarkierung 20 verlassen und an dem Objekt 32 vorbeifahren.

Bevorzugt kann, um entgegenkommende Fahrzeuge nicht zu behindern oder zu gefährden, zusätzlich der fahrzeugexterne Sensor 22, der sich an der Straßenseite befinden kann, eine Information über einen Gegenverkehr an das autonome Kraftfahrzeug 12 senden. Alternativ oder zusätzlich können entgegenkommende Fahrzeuge (nicht gezeigt) Positionsdaten über eine Fahrzeug-zu-Fahrzeug-Kommunikation an das autonome Kraftfahrzeug 12 senden.

Bei dem Verlassen der vorgegebenen Fahrbahnmarkierung 20 zum Passieren des Objekts 32 kann das autonome Kraftfahrzeug kurzzeitig auf die Gegenfahrbahn fahren, wo beispielsweise auch eine Fahrbahnmarkierung (nicht gezeigt) vorhanden sein kann. Damit das autonom fahrende Kraftfahrzeug 12 diese nicht als eigene erkennt und somit die Geschwindigkeit auf den erlaubten Geschwindigkeitswert freigibt, kann bevorzugt vorgesehen sein, dass innerhalb der vorgegebenen Fahrbahnmarkierung 20 ein Radiofrequenzidentifikationschip (RFID) vorgesehen ist, der eine Fahrspur für das autonome Kraftfahrzeug identifiziert, wodurch eine Verwechslung der Fahrspur vermieden werden kann.

Alternativ zum Passieren des Objekts 32 kann beispielsweise auch ein Verlassen der vorgegebenen Fahrbahnmarkierung 20 zum Fahren auf einen Parkplatz abseits der vorgegebenen Fahrbahnmarkierung durchgeführt werden.

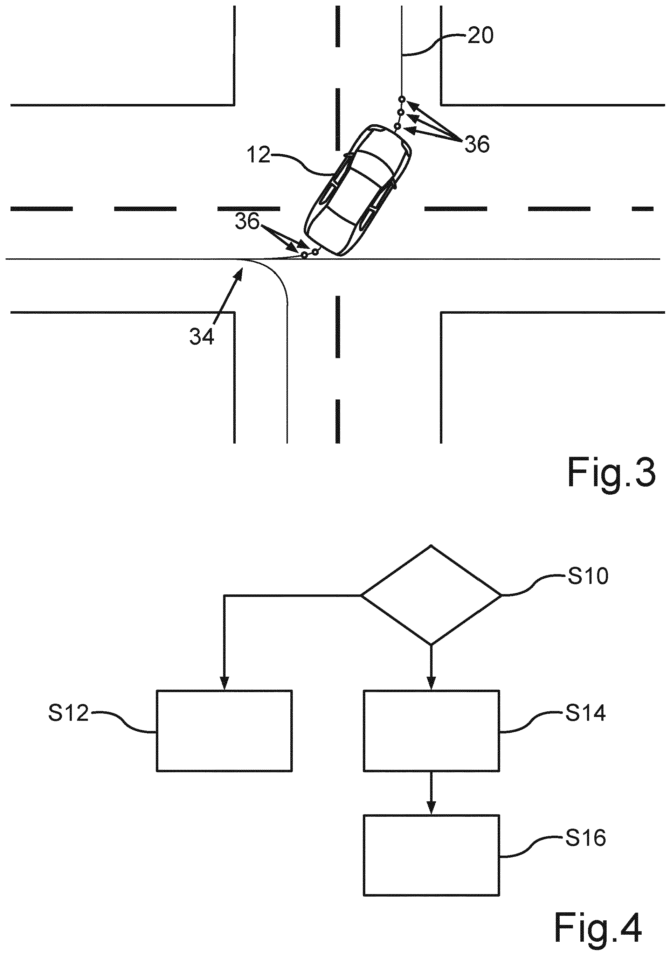

In Fig. 3 ist eine Straßenkreuzung und ein Abbiegevorgang des autonomen Kraftfahrzeugs 12 gemäß einer beispielhaften Ausführungsform des Spurführsystems 10 dargestellt. Beispielsweise kann die vorgegebene Fahrbahnmarkierung 20 bei einer Straßenkreuzung in unterschiedliche Richtungen verlaufen. Insbesondere kann sich die vorgegebene Fahrbahnmarkierung 20 an einem Kreuzungspunkt 34 aufteilen. Der Kreuzungspunkt 34 kann derart ausgeführt sein, dass sich ein stetiger, differenzierbarer und eindeutiger Bewegungsablauf des autonomen Kraftfahrzeugs 12 ergibt. Hierzu kann zusätzlich ein optisches Signal an und/oder in der Fahrbahnmarkierung vorgesehen sein, das einen Fahrweg des autonomen Kraftfahrzeugs anzeigt. Insbesondere kann das optische Signal durch ein Lichtband 36 hervorgerufen werden, das den Verlauf des Fahrtwegs des autonomen Kraftfahrzeugs an den Kreuzungspunkt 34 anzeigen kann. Somit kann neben einer Signalanzeige des autonomen Kraftfahrzeugs auch die vorgegebene Fahrbahnmarkierung 20 den Fahrweg des Kraftfahrzeugs anzeigen und somit eine Verkehrssicherheit erhöhen, da andere Verkehrsteilnehmer auf den Weg des Kraftfahrzeugs aufmerksam gemacht werden können.

Auch bei dem Abbiegevorgang des autonomen Kraftfahrzeugs 12 ist eine Führung des Kraftfahrzeugs entlang der Fahrbahnmarkierung 20 vorgesehen. Hierbei kann der Fahrzeugmittelpunkt beziehungsweise Schwerpunkt des Fahrzeugs möglichst genau auf der Fahrbahnmarkierung 20 geführt werden. Beispielsweise können zulässige Toleranzen in Querrichtung in gesetzlichen Rahmenbedingungen definiert werden. Insbesondere kann eine Abweichung des Fahrzeugmittelpunkts von der Fahrbahnmarkierung 20 höchstens 50 cm betragen.

In Fig. 4 ist ein schematisches Verfahrensdiagramm gemäß einer beispielhaften Ausführungsform dargestellt. In einem Schritt S10 wird bestimmt, ob sich das autonome Kraftfahrzeug 12 auf einer vorgegebenen Fahrbahnmarkierung 20 befindet. Falls das verneint wird, wird in einem Schritt S12 eine Fahrzeuggeschwindigkeit auf einen vorgegebenen Sicherheitswert begrenzt.

Wird bestimmt, dass sich das autonome Kraftfahrzeug 12 auf der vorgegebenen Fahrbahnmarkierung 20 befindet, kann in einem Schritt S14 das autonome Kraftfahrzeug 12 auf der vorgegebenen Fahrbahnmarkierung 20 gesteuert werden, wobei die Fahrzeuggeschwindigkeit auf einen vorgegebenen Geschwindigkeitswert begrenzt wird.

Wird das Fahrzeug auf der vorgegebenen Fahrbahnmarkierung 20 gesteuert, kann in einem Schritt S16 ermittelt werden, ob sich ein Objekt innerhalb eines Sicherheitsbereichs vor dem autonomen Kraftfahrzeug befindet und/oder ob eine Bewegung des Objekts von einem Beobachtungsbereich in Richtung des Sicherheitsbereichs einer vorgegebenen Bedingung entspricht und falls dies der Fall ist, kann die Fahrzeuggeschwindigkeit verringert werden, wobei das autonome Kraftfahrzeug 12 während des Verringerns der Fahrzeuggeschwindigkeit auf der vorgegebenen Fahrbahnmarkierung 20 bleibt, falls die Fahrzeuggeschwindigkeit über dem vorgegebenen Sicherheitswert ist.

Insgesamt zeigen die Beispiele, wie durch die Erfindung eine Fahrspurmarkierung für autonome Kraftfahrzeuge bereitgestellt werden kann.

## Patentansprüche

1. Verfahren zum Steuern eines autonomen Kraftfahrzeugs (12) in einem urbanen Gebiet mit den Schritten:
a) Bestimmen (S10), ob sich das autonome Kraftfahrzeug (12) auf einer vorgegebenen Fahrbahnmarkierung (20) befindet;
b) falls Schritt a) verneint wird: Begrenzen (S12) einer Fahrzeuggeschwindigkeit auf einen vorgegebenen Sicherheitswert;
c) falls Schritt a) bejaht wird: Steuern (S14) des autonomen Kraftfahrzeugs auf der vorgegebenen Fahrbahnmarkierung (20), wobei die Fahrzeuggeschwindigkeit auf einen vorgegebenen Geschwindigkeitswert begrenzt wird;
**dadurch gekennzeichnet, dass**
für den vorgegebenen Sicherheitswert eine Schrittgeschwindigkeit verwendet wird, insbesondere ein Wert in einem Bereich von 5 km/h bis 15 km/h.

2. Verfahren nach Anspruch 1, wobei das Steuern in Schritt c) ferner folgenden Schritt umfasst:
d) Ermitteln (S16), ob sich ein Objekt (32) innerhalb eines Sicherheitsbereichs (26) vor dem autonomen Kraftfahrzeug (12) befindet, wobei der Sicherheitsbereich (26) entlang der vorgegebenen Fahrbahnmarkierung (20) verläuft;
- falls Schritt d) bejaht wird: Verringern der Fahrzeuggeschwindigkeit an eine Objektgeschwindigkeit, wobei das autonome Kraftfahrzeug (12) während des Verringerns der Fahrzeuggeschwindigkeit auf der vorgegebenen Fahrbahnmarkierung (20) bleibt, falls die Fahrzeuggeschwindigkeit über dem vorgegebenen Sicherheitswert ist.

3. Verfahren nach Anspruch 2, wobei das Steuern in Schritt c) ferner folgenden Schritt umfasst:
e) Ermitteln, ob eine Bewegung des Objekts von einem Beobachtungsbereich (28) in Richtung des Sicherheitsbereichs (26) einer vorgegebenen Bedingung entspricht;
- Falls Schritt e) bejaht wird: Verringern der Fahrzeuggeschwindigkeit, wobei das autonome Kraftfahrzeug (12) während des Verringerns der Fahrzeuggeschwindigkeit auf der vorgegebenen Fahrbahnmarkierung (20)bleibt.

4. Verfahren nach einem der Ansprüche 2 oder 3, wobei das Ermitteln ob sich das Objekt (32) in dem Sicherheitsbereich (26) befindet oder sich in Richtung des Sicherheitsbereichs bewegt von einem fahrzeuginternen (16) und/oder fahrzeugexternen Sensor (22) durchgeführt wird.

5. Verfahren nach einem der vorhergehenden Ansprüche, wobei das auf der vorgegebenen Fahrbahnmarkierung befindliche autonome Kraftfahrzeug die vorgegebene Fahrbahnmarkierung (20) nur dann verlässt, wenn die Fahrzeuggeschwindigkeit unterhalb des vorgegebenen Sicherheitswerts ist.

6. Verfahren nach einem der vorhergehenden Ansprüche, wobei sich die vorgegebene Fahrbahnmarkierung (20) an einem Kreuzungspunkt (34) aufteilt, und wobei durch ein optisches Signal (36) an und/oder in der Fahrbahnmarkierung ein Fahrweg des autonomen Kraftfahrzeugs angezeigt wird.

7. Verfahren nach einem der vorhergehenden Ansprüche, wobei die vorgegebene Fahrbahnmarkierung (20) durch eine Straßenbahnschiene und/oder eine Markierungsfarbe angezeigt wird.

8. Verfahren nach einem der vorhergehenden Ansprüche, wobei die vorgegebene Fahrbahnmarkierung (20) ferner durch ein elektromagnetisches Signal angezeigt wird.

9. Spurführsystem (10) zum Steuern eines autonomen Kraftfahrzeugs (12) in einem urbanen Gebiet
- mit einer Sensoreinrichtung (16), die dazu ausgebildet ist, zu bestimmen, ob sich das autonome Kraftfahrzeug auf einer vorgegebenen Fahrbahnmarkierung (20) befindet und
- mit einer Steuereinrichtung (18), die dazu ausgebildet ist, eine Fahrzeuggeschwindigkeit auf einen vorgegebenen Sicherheitswert zu begrenzen, falls sich das autonome Kraftfahrzeug (12) nicht auf der vorgegebenen Fahrbahnmarkierung (20) befindet, und das autonome Kraftfahrzeug (12) zu steuern und die Fahrzeuggeschwindigkeit auf einen vorgegebenen Geschwindigkeitswert zu begrenzen, falls sich das autonome Kraftfahrzeug (12) auf der vorgegebenen Fahrbahnmarkierung (20) befindet,
**dadurch gekennzeichnet, dass**
der vorgegebene Sicherheitswert eine Schrittgeschwindigkeit ist, insbesondere ein Wert in einem Bereich von 5 km/h bis 15 km/h.

## Claims

1. Method for controlling an autonomous motor vehicle (12) in an urban area having the steps:
a) determining (S10) whether the autonomous motor vehicle (12) is located on a specified road marking (20);
b) in the case that step a) is negated: limiting (S12) a vehicle speed to a specified safety value;
c) in the case that step a) is affirmed: controlling (S14) the autonomous motor vehicle on the specified road marking (20), wherein the vehicle speed is limited to a specified speed value;
**characterised in that**
for the predetermined safety value a walking speed is used, particularly a value in a range from 5 km/h to 15 km/h.

2. Method according to claim 1, wherein the controlling in step c) furthermore comprises the following step:
d) establishing (S16) whether an object (32) is located within a safety region (26) in front of the autonomous motor vehicle (12), wherein the safety region (26) extends along the specified road marking (20);
- in the case that step d) is affirmed: reducing the vehicle speed to an object speed, wherein the autonomous motor vehicle (12) remains on the specified road marking (20) during the reduction in the vehicle speed, in the case that the vehicle speed is above the specified safety value.

3. Method according to claim 2, wherein the controlling in step c) furthermore comprises the following step:
e) establishing whether a movement of the object from an observing region (28) in the direction of the safety region (26) corresponds to a specified condition;
- in the case that step e) is affirmed: reducing the vehicle speed, wherein the autonomous motor vehicle (12) remains on the specified road marking (20) during the reduction in the vehicle speed.

4. Method according to any of claims 2 or 3, wherein the establishing as to whether the object (32) is located in the safety region (26) or is moving in the direction of the safety region, is carried out by a sensor which is inside the vehicle (16) and/or external to the vehicle (22).

5. Method according to any of the preceding claims, wherein the autonomous motor vehicle located on the specified road marking only leaves the specified road marking (20) when the vehicle speed is below the specified safety value.

6. Method according to any of the preceding claims, wherein the specified road marking (20) splits at a crossing point (34), and wherein a drive path of the autonomous motor vehicle is displayed by an optical signal (36) on and/or in the road marking.

7. Method according to any of the preceding claims, wherein the specified road marking (20) is displayed by a tram track and/or a marking colour.

8. Method according to any of the preceding claims, wherein the specified road marking (20) is furthermore displayed by an electromagnetic signal.

9. Track guidance system (10) for controlling an autonomous motor vehicle (12) in an urban area
- having a sensor device (16) which is configured to determine whether the autonomous motor vehicle is located on a specified road marking (20), and
- having a control device (18) which is configured to limit a vehicle speed to a specified safety value, in the case that the autonomous motor vehicle (12) is not located on the specified road marking (20), and to control the autonomous motor vehicle (12) and to limit the vehicle speed to a specified speed value, in the case that the autonomous motor vehicle (12) is located on the specified road marking (20),
**characterised in that**
the specified safety value is a walking speed, in particular a value in a range from 5 km/h to 15 km/h.

## Revendications

1. Procédé de commande d'un véhicule automobile autonome (12) dans une zone urbaine avec les étapes consistant à :
a) déterminer (S10) si le véhicule automobile autonome (12) se trouve sur un marquage de voie prédéterminé (20) ;
b) si l'étape a) est niée : limiter (S12) une vitesse de véhicule à une valeur de sécurité prédéterminée ;
c) si l'étape a) est affirmée : diriger (S14) le véhicule automobile autonome sur le marquage de voie prédéterminé (20), dans lequel la vitesse de véhicule est limitée à une valeur de vitesse prédéterminée ;
**caractérisé en ce qu'**
une vitesse au pas est utilisée pour la valeur de sécurité prédéterminée, en particulier une valeur dans une plage de 5 km/h à 15 km/h.

2. Procédé selon la revendication 1, dans lequel la commande à l'étape c) comprend en outre l'étape suivante consistant à :
(d) déterminer (S16) si un objet (32) se trouve dans une zone de sécurité (26) devant le véhicule automobile autonome (12), dans lequel la zone de sécurité (26) s'étend le long du marquage de voie prédéterminé (20) ;
- si l'étape d) est affirmée : réduire la vitesse de véhicule à une vitesse d'objet, dans lequel le véhicule automobile autonome (12) reste sur le marquage de voie prédéterminé (20) pendant la réduction de la vitesse de véhicule si la vitesse de véhicule est supérieure à la valeur de sécurité prédéterminée.

3. Procédé selon la revendication 2, dans lequel la commande à l'étape c) comprend en outre l'étape suivante consistant à :
e) déterminer si un déplacement de l'objet d'une zone d'observation (28) en direction de la zone de sécurité (26) correspond à une condition prédéterminée ;
- si l'étape e) est affirmée : réduire la vitesse de véhicule, dans lequel le véhicule automobile autonome (12) reste sur le marquage de voie prédéterminé (20) pendant la réduction de la vitesse de véhicule.

4. Procédé selon l'une quelconque des revendications 2 ou 3, dans lequel la détermination de la présence de l'objet (32) dans la zone de sécurité (26) ou de son déplacement vers la zone de sécurité est réalisée par un capteur interne au véhicule (16) et/ou externe au véhicule (22).

5. Procédé selon l'une quelconque des revendications précédentes, dans lequel le véhicule automobile autonome se trouvant sur le marquage de voie prédéterminé ne quitte le marquage de voie prédéterminé (20) que lorsque la vitesse de véhicule est inférieure à la valeur de sécurité prédéterminée.

6. Procédé selon l'une quelconque des revendications précédentes, dans lequel le marquage de voie prédéterminé (20) se divise en un point d'intersection (34), et dans lequel une trajectoire du véhicule automobile autonome est indiquée par un signal optique (36) sur et/ou dans le marquage de voie.

7. Procédé selon l'une quelconque des revendications précédentes, dans lequel le marquage de voie prédéterminé (20) est indiqué par un rail de tramway et/ou une couleur de marquage.

8. Procédé selon l'une quelconque des revendications précédentes, dans lequel le marquage de voie prédéterminé (20) est en outre indiqué par un signal électromagnétique.

9. Système de guidage de voie (10) pour commander un véhicule automobile autonome (12) dans une zone urbaine
- avec un dispositif de détection (16) qui est conçu pour déterminer si le véhicule automobile autonome se trouve sur un marquage de voie prédéterminé (20) et
- avec un dispositif de commande (18) qui est conçu pour limiter une vitesse de véhicule à une valeur de sécurité prédéterminée, si le véhicule automobile autonome (12) ne se trouve pas sur le marquage de voie prédéterminé (20), et commander le véhicule automobile autonome (12) et limiter la vitesse de véhicule à une valeur de vitesse prédéterminée si le véhicule automobile autonome (12) se trouve sur le marquage de voie prédéterminé (20),
**caractérisé en ce que**
la valeur de sécurité prédéterminée est une vitesse au pas, en particulier une valeur dans une plage de 5 km/h à 15 km/h.
